# EUROPÄISCHE PATENTSCHRIFT

(11) **EP 2 062 905 B1**
(45) Veröffentlichungstag und Bekanntmachung des Hinweises auf die Patenterteilung: **11.01.2012**
(21) Anmeldenummer: 08020052.0
(22) Anmeldetag: 18.11.2008
(51) Int. Cl.: C07F 9/40, C08K 5/51, C07F 9/09

(54) **Mischungen von phosphorhaltigen Verbindungen, ein Verfahren zu deren Herstellung und deren Verwendung als Flammschutzmittel**
Mixtures of phosphorus-containing compounds, method for production of the same and use of the same as flame-retardant material
Mélanges de liaisons contenant du phosphore, leur procédé de fabrication et leur utilisation comme agent ignifuge

(30) Priorität: 23.11.2007 DE 102007056532
(43) Veröffentlichungstag der Anmeldung: 27.05.2009
(73) Patentinhaber: Clariant Finance (BVI) Limited, Road Town, Tortola (VG)
(72) Erfinder: Maas, Wiebke, 45657 Recklinghausen (DE); Dietz, Mathias, 52152 Simmerath (DE); Sicken, Martin, 51149 Köln (DE)
(74) Vertreter: Mikulecky, Klaus

(56) Entgegenhaltungen:
- EP-A- 0 214 542
- EP-A- 0 465 724
- EP-A- 0 908 464
- DE-A1- 19 927 548
- US-A- 4 091 030

## Beschreibung

Die Erfindung betrifft Mischungen von phosphorhaltigen Verbindungen, ein Verfahren zu deren Herstellung und deren Verwendung als Flammschutzmittel.

Phosphorhaltige Verbindungen werden vielseitig als Flammschutzmittel in verschiedenen Kunststoffen eingesetzt, bspw. in Polyurethanen. Polyurethan-Kunststoffe können zu Schäumen, Folien und Gießharzen verarbeitet werden und finden in vielen Bereichen, wie in Möbeln, Matratzen, Transport, Bau und technischer Dämmung Verwendung. Zum Erreichen hoher Flammschutzanforderungen, wie sie für Materialien u. a. für den Automobil-, Bahn- und Flugzeuginnenausstattungsbereich sowie die Bauisolierung gefordert sind, müssen Polyurethan-Kunststoffe mit sehr effizienten Flammschutzmitteln ausgerüstet werden. Hierzu ist eine Reihe unterschiedlicher Flammschutzmittel bekannt und kommerziell erhältlich. Dem Einsatz dieser Flammschutzmittel stehen allerdings vielfach erhebliche anwendungstechnische Probleme bzw. toxikologische Bedenken entgegen.

So treten bei Verwendung fester Flammschutzmittel wie z. B. Melamin, Ammoniumpolyphosphat und Ammoniumsulfat dosiertechnische Probleme auf, die vielfach Modifikationen der Verschäumanlagen, d. h. aufwendige Umbauten und Anpassungen derselben notwendig machen. Ein Großteil der eingesetzten flüssigen Flammschutzmittel, wie beispielsweise Tris(2-chlorethyl)-phosphat, Tris(2-chlorisopropyl)phosphat und Tetrakis(2-chlorethyl)ethylendiphosphat sind durch eine deutliche Migrationsneigung gekennzeichnet, die die Verwendbarkeit in offenzelligen Polyurethanweichschaumsystemen für die Automobil-Innenausstattung aufgrund der Anforderungen an die kondensierbaren Emissionen (Fogging) weitgehend einschränken.

Unter Fogging versteht man die Kondensation von verdampften flüchtigen Bestandteilen aus der Kraftfahrzeug-Innenausstattung an Glasscheiben, insbesondere an der Windschutzscheibe. Diese Erscheinung kann nach DIN 75201 quantitativ beurteilt werden.

Weiterhin werden aus ökotoxikologischen Gesichtspunkten sowie aufgrund verbesserter Brandnebenerscheinungen bezüglich Rauchgasdichte und Rauchgastoxizität halogenfreie Flammschutzmittelsysteme bevorzugt. Auch aus anwendungstechnischen Gründen können halogenfreie Flammschutzmittel von besonderem Interesse sein. So beobachtet man z. B. bei der Verwendung von halogenierten Flammschutzmitteln starke Korrosionserscheinungen an den zur Flammkaschierung von Polyurethanschäumen verwendeten Anlagenteilen. Dies kann auf die bei der Flammkaschierung halogenhaltiger Polyurethanschäume auftretenden Halogenwasserstoffsäure-Emissionen zurückgeführt werden.

Als Flammkaschierung bezeichnet man ein Verfahren zur Verbindung von Textilien und Schaumstoffen, bei der eine Seite einer Schaumstofffolie mit Hilfe einer Flamme angeschmolzen und in unmittelbarem Anschluss daran mit einer Textilbahn verpresst wird.

Vor dem Hintergrund des Trends zur Berücksichtigung von gasförmigen Emissionen (Volatile Organic Compounds = VOC) ergeben sich zudem wachsende Anforderungen an die Migrationsstabilität von Flammschutzmitteln.

Lösungen im Sinne hoher Migrationsstabilität bieten beispielsweise hydroxylgruppentragende oligomere Phosphorsäureester (DE-A-43 42 973) und Hydroxyalkylphosphonate (DE-A-199 27 548). Diese Phosphorsäureester und Hydroxyalkylphosphonate zeigen nur geringe Fogging-Werte, jedoch eine hohe Hydrolyseempfindlichkeit und eine Tendenz zur Geschlossenzelligkeit im Polyurethanschaum, was zur Verschlechterung der mechanischen Eigenschaften des Schaums führt. Ein weiterer Nachteil besteht in der hohen Hydroxylzahl, durch die das Flammschutzmittel eine hohe Reaktivität gegenüber der Isocyanatkomponente aufweist und somit die Steuerung der Schaumherstellung erschwert.

Es ist Aufgabe der vorliegenden Erfindung, solche phosphorhaltige Verbindungen zur Verfügung zu stellen, die beim Einsatz als Flammschutzmittel die vorgenannten Nachteile aufheben bzw. vermeiden.

Es ist ebenfalls Aufgabe der vorliegenden Erfindung, ein Flammschutzmittel zur Verfügung zu stellen, das die vorgenannten Nachteile nicht aufweist. Insbesondere sollen bei der Verwendung des erfindungsgemäßen Flammschutzmittels für Polyurethanweichschäume nur geringe Fogging-Werte resultieren und eine angemessene Offenzelligkeit des Schaumes erreicht werden. Das Flammschutzmittel selbst soll eine geringe Hydrolyseempfindlichkeit und eine niedrige Hydroxylzahl aufweisen, damit die Dosierung des Flammschutzmittels und die Steuerung der Schaumherstellung erleichtert wird.

Die Erfindung betrifft daher Mischungen von Verbindungen der Formeln (I), (III), (IV) und/oder (V), 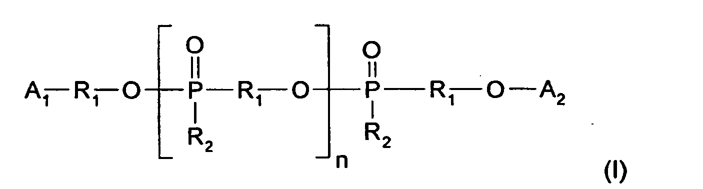 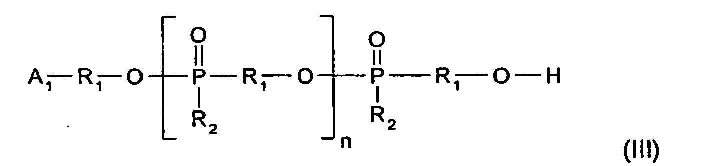 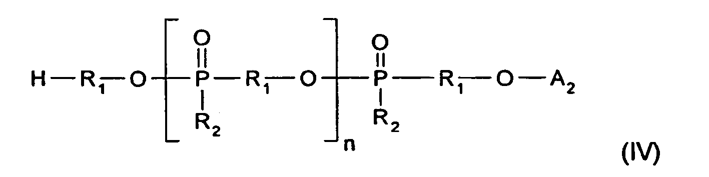 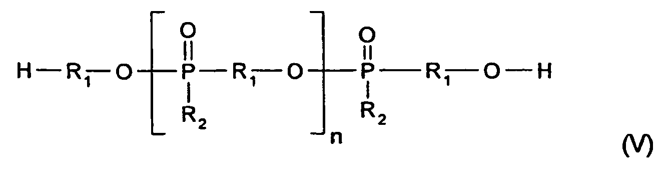 worin n eine durchschnittliche Kettenlänge von 0 bis 10,
A₁ und A₂ gleich oder verschieden sind und unabhängig voneinander C(=O)NHR₅, C(=O)R₅, CH₃, CH₂CH₃, CH₂CH₂CH₃, CH(CH₃)₂, CH₂(CH₂)₂CH₃, CH₂CH(CH₃)₂, C(CH₃)₃, C₆H₅ und/oder CH₂-C₆H₅,
R₁ ein Rest der allgemeinen Formel (II), 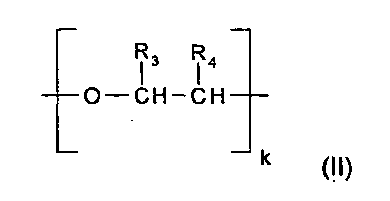 worin k eine durchschnittliche Kettenlänge von 0 - 5 bedeutet;
R₂ CH₃, CH₂CH₃, CH₂CH₂CH₃, CH₂(CH₃)₂, CH₂(CH₂)₂CH₃, CH₂CH(CH₃)₂, C(CH₃)₃, C₆H₅ oder CH₂-C₆H₅; OCH₃, OCH₂CH₃, O(CH₂)₂CH₃, OCH(CH₃)₂, O(CH₂)₃CH₃, OCH₂CH(CH₃)₂, OC(CH₃)₃, O-C₆H₅ oder O-CH₂-C₆H₅,
R₃, R₄, R₅ gleich oder verschieden sind und unabhängig voneinander CH₃, CH₂CH₃, CH₂CH₂CH₃, CH(CH₃)₂, CH₂(CH₂)₂CH₃, CH₂CH(CH₃)₂, C(CH₃)₃, C₆H₅ und/oder CH₂-C₆H₅ bedeuten und wobei mindestens 2 Verbindungen der Formeln (I), (III), (IV) oder (V) gleichzeitig in der Mischung anwesend sind.

Bevorzugt enthalten die Mischungen
0,1 bis 99,7 Gew.-% Verbindungen der Formel (I),
0,1 bis 99,7 Gew.-% Verbindungen der Formel (II) und
0,1 bis 99,7 Gew.-% Verbindungen der Formel (IV)

Bevorzugt enthalten die Mischungen auch
0,1 bis 99,6 Gew.-% Verbindungen der Formel (I),
0,1 bis 99,6 Gew.-% Verbindungen der Formel (II),
0,1 bis 99,6 Gew.-% Verbindungen der Formel (IV) und
0,1 bis 99,6 Gew.-% Verbindungen der Formel (V).

Bevorzugt bedeutet
R₂ CH₃, CH₂CH₃, CH₂CH₂CH₃, CH(CH₃)₂, C₆H₅, OCH₃, OCH₂CH₃, O(CH₂)₂CH₃ oder O-C₆H₅,
R₃, R₄, R₅ sind gleich oder verschieden und bedeuten, unabhängig voneinander CH₃, CH₂CH₃ und/oder CH₂CH₂CH₃ und
A₁, A₂ sind gleich oder verschieden und bedeuten, unabhängig voneinander C(=O)NHR₅, C(=O)R₅, CH₃, CH₂CH₃, (CH₂)₂CH₃, CH(CH₃)₂, CH₂(CH₂)₂CH₃, CH₂CH(CH₃)₂, C(CH₃)₃, C₆H₅ und/oder CH₂-C₆H₅,
k eine durchschnittliche Kettenlänge von 1 - 3 und
n eine durchschnittliche Kettenlänge von 0 - 5.

Die Erfindung betrifft auch ein Verfahren zur Herstellung von den vorgenannten Mischungen nach einem oder mehreren der Ansprüche 1 bis 3, dadurch gekennzeichnet, dass ein polymerer Phosphor- oder Phosphonsäureester der allgemeinen Formel (V) mit einem Verkappungsreagenz in Gegenwart eines basischen Katalysators zu der Mischung umgesetzt wird.

Bevorzugt handelt es sich bei dem Verkappungsreagenz um Monoalkylisocyanate, Monoarylisocyanate, Carbonsäureanhydride, Carbonsäurechloride, Alkylhalogenide, Aralkylhalogenide und/oder Diazomethan.
Bevorzugt handelt es sich bei dem basischen Katalysator um tertäre Amine und/oder organische Zinkverbindungen.

Bevorzugt handelt es sich bei dem basischen Katalysator um Pyridin, Triethylamin, Tetramethylbutandiamin (TMBDA), 1,4-Diaza(2,2,2)bicyclooctan (DABCO), Tetramethylguanidin, 1,5-Diazabicyclo[4.3.0]non-5-en (DBN), 1,8-Diazabicyclo-[5.4.0]undec-7-en (DBU), Dibutylzinndilaurat, Zinn(II)octoat und/oder Zinnricinolat.

Besonders bevorzugt handelt es sich bei dem basischen Katalysator um Zinn(II)octoat und/oder Pyridin.

Die Erfindung betrifft auch die Verwendung der vorgenannten Mischungen nach einem oder mehreren der Ansprüche 1 bis 3 als Flammschutzmittel, in Mischung mit anderen Flammschutzmitteln, alleine oder in Mischung mit anderen Flammschutzmitteln zur Herstellung von weiteren Flammschutzmitteln oder Vorprodukten davon.

Bevorzugt werden die vorgenannten Mischungen nach einem oder mehreren der Ansprüche 1 bis 3 als Flammschutzmittel für Polyurethan-Kunststoffe, die auf Polyether- oder Polyester-Systemen basieren, verwendet.

Insbesondere betrifft die Erfindung die Verwendung von den vorgenannten Mischungen nach einem oder mehreren der Ansprüche 1 bis 3 als Flammschutzmittel für die Herstellung von flammgeschützten Polyurethan-Kunststoffen, die als Elastomere durch Gießen, als Hart- oder Weichschäume in kontinuierlicher oder diskontinuierlicher Herstellungsweise, als geschäumte oder massive Formartikel oder als Folie hergestellt werden.

Bevorzugt werden die vorgenannten Mischungen nach einem oder mehreren der Ansprüche 1 bis 3 auch als Flammschutzmittelbooster, als Flammschutzmittel für Klarlacke und Intumeszenzbeschichtungen, Flammschutzmittel für Holz und andere cellulosehaltige Produkte, als reaktives und/oder nicht reaktives Flammschutzmittel für Polymere und/oder zum flammhemmend Ausrüsten von Polyester und Cellulose-Rein- und Mischgeweben durch Imprägnierung verwendet.

Die Erfindung betrifft aber auch die Verwendung von den vorgenannten Mischungen nach einem oder mehreren der Ansprüche 1 bis 3 als Binder für Giesereimassen, Formsande;
als Vernetzer bzw. Beschleuniger beim Aushärten von Epoxyharzen, Polyurethanen und ungesättigten Polyesterharzen;
als Polymerstabilisatoren, wie als Lichtschutzstabilisator, Radikalfänger und/oder Thermostabilisatoren für Baumwollgewebe, Polymerfasern, Kunststoffe;
als Pflanzenschutzmittel, wie als Pflanzenwachstumsregulator, als Herbizid, Pestizid oder Fungizid;
als Therapeutikum oder Additiv in Therapeutika für Menschen und Tiere, als Enzymmodulator, zur Stimulierung von Gewebewachstum;
als Sequestrierungsmittel, bei der Mineralölgewinnung und in
Metallbehandlungsmitteln;
als Mineralöl-Additiv, als Antioxidans und zur Erhöhung der Oktanzahl;
als Korrosionsschutzmittel;
in Wasch- und Reinigungsmittelanwendungen, als Entfärbungsmittel;
in Elektronikanwendungen, in Polyelektrolyten für Kondensatoren, in Batterien und Akkumulatoren, sowie als Radikalfänger in photosensitiven Schichten;
als Aldehydfänger;
Formaldehydfänger in Klebemassen und Formkörpern, in Bauanwendungen, Automobil-, Schiff-, Luft und Raumfahrtindustrie und für die Elektrotechnik.

Die eingangs genannte Aufgabe wird auch gelöst durch ein Flammschutzmittel, enthaltend eine Mischung von Verbindungen der Formeln (I), (III), (IV) und/oder (V), dadurch gekennzeichnet, dass es
0,1 - 10 Gew.-% Verbindungen der Formel (V),
0 - 30 Gew.-% Verbindungen der Formel (III) und (IV) und
70 - 99,9 Gew.-% Verbindungen der Formel (I) enthalten.

Geeignet ist ebenfalls ein Flammschutzmittel, enthaltend eine Mischung von Verbindungen der Formeln (I), (III), (IV) und/oder (V), dadurch gekennzeichnet, dass es 0,1 - 20 Gew.-% Verbindungen der Formel (V)
50 - 99,8 Gew.-% Verbindungen der Formel (III) und (IV) und
0,1 - 20 Gew.-% Verbindungen der Formel (I) enthalten.

In einer anderen Ausführungsweise enthält das Flammschutzmittel eine Mischung von Verbindungen der Formeln (I), (III), (IV) und/oder (V) in folgenden Mengen:
0,1 - 10 Gew.-% Verbindungen der Formel (I),
25 - 60 Gew.-% Verbindungen der Formeln (III) und (IV) und
30 - 74,9 Gew.-% Verbindungen der Formel (V).

In einer weiteren Ausführungsweise enthält das Flammschutzmittel eine Mischung von Verbindungen der Formeln (I), (III), (IV) und/oder (V) in folgenden Mengen:
0,1 - 5 Gew.-% Verbindungen der Formel (I),
10 - 40 Gew.-% Verbindungen der Formeln (III) und (IV) und
50 - 89,9 Gew.-% Verbindungen der Formel (V).

Bevorzugt bedeuten dabei in den Formeln (I), (III), (IV) und/oder (V)
R₂ CH₃, CH₂CH₃, CH₂CH₂CH₃, CH(CH₃)₂, C₆H₅, OCH₃, OCH₂CH₃, O(CH₂)₂CH₃ oder O-C₆H₅,
R₃, R₄, R₅ sind gleich oder verschieden und bedeuten, unabhängig voneinander CH₃, CH₂CH₃ und/oder CH₂CH₂CH₃ und
A₁, A₂ sind gleich oder verschieden und bedeuten, unabhängig voneinander C(=O)NHR₅, C(=O)R₅, CH₃, CH_{2CH3}, (CH₂)₂CH₃, CH(CH₃)₂, CH₂(CH₂)₂CH₃, CH₂CH(CH₃)₂, C(CH₃)₃, C₆H₅ und/oder CH₂-C₆H₅,
k bedeutet eine durchschnittliche Kettenlänge von 1 - 3 und
n bedeutet eine durchschnittliche Kettenlänge von 0 - 5.

Wieviel an Verbindungen der Formeln (I), (III), (IV) und/oder (V) in den erfindungsgemäßen Mischungen enthalten ist, kann grundsätzlich über die Mengenzufuhr bzw. das Einsatzverhältnis Verkappungsreagenz zu Verbindung (V) - welche eines der Edukte darstellt - reguliert werden. Entsprechend können die Mengenverhältnisse an Verbindungen der Formeln (I), (III), (IV) und/oder (V) in der erfindungsgemäßen Mischung in weiten Grenzen variieren, wie es den Ansprüchen 2 und 3 entspricht und wie es auf den vorangangenen Seiten bei den bevorzugten Mischungen wiedergegeben ist.

So werden etwa bei einem Einsatzverhätnis von Phosphor-Komponente zu Verkappungsreagenz von 1 zu 2 Mischungen erhalten, die 0,1 - 10 % polymere Phosphor- oder Phosphonsäureester der allgemeinen Formel (V), in Summe 0 - 30 Gew.-% der Phosphorkomponenten der Formeln (III) und (IV) und 70 - 99,9 Gew.-% der Phosphorkomponenten der Formel (I) enthalten. Die Phosphorkomponenten der Formeln (III) und (IV) liegen dabei bevorzugt in einem Verhältnis von 1,5 : 1 bis 1 : 1,5 vor.

Bei einem Einsatzverhätnis von Phosphor-Komponente zu Verkappungsreagenz von 1 zu 1 werden Mischungen erhalten, die 0,1 - 20 % polymere Phosphor- oder Phosphonsäureester der allgemeinen Formel (V), in Summe 50 - 99,9 Gew.- % der Phosphorkomponenten der Formeln (III) und (IV) und 0,1 - 20 Gew.-% der Phosphorkomponenten der Formel (I) enthalten. Die Phosphorkomponenten der Formeln (III) und (IV) liegen bevorzugt in einem Verhältnis von 1,5 : 1 bis 1 : 1,5 vor.

Bei einem Einsatzverhätnis von Phosphor-Komponente zu Verkappungsreagenz von 2 zu 1 werden Mischungen erhalten, die 30 - 75 Gew.-% polymere Phosphor- oder Phosphonsäureester der allgemeinen Formel (V), in Summe 25 - 60 Gew.-% der Phosphorkomponenten der Formeln (III) und (IV) und 0,1 - 10 Gew.-% der Phosphorkomponenten der Formel (I) enthalten. Die Phosphorkomponenten der Formeln (III) und (IV) liegen bevorzugt in einem Verhältnis von 1,5 : 1 bis 1 : 1,5 vor.

Bei einem Einsatzverhätnis von Phosphor-Komponente zu Verkappungsreagenz von 4 zu 1 werden Mischungen erhalten, die 50 - 90 % polymere Phosphor- oder Phosphonsäureester der allgemeinen Formel (V), in Summe 10 - 40 % der Phosphorkomponenten der Formeln (III) und (IV) und 0,1 - 5 % der Phosphorkomponenten der Formel (I) enthalten. Die Phosphorkomponenten der Formeln (III) und (IV) liegen bevorzugt in einem Verhältnis von 1,5 : 1 bis 1 : 1,5 vor.

Bevorzugt weist das erfindungsgemäße Flammschutzmittel eine Säurezahl von 0,05 - 5 mg KOH/ g, besonders bevorzugt von 0,1 - 2 mg KOH/g auf.

Bevorzugt weist das erfindungsgemäße Flammschutzmittel eine Viskosität von 0,01 - 50 Pa.s bei 25 °C, insbesondere von 5 - 15 Pa.s bei 25 °C auf.
Bevorzugt weist das erfindungsgemäße Flammschutzmitteleinen Phosphorgehalt von 1 - 25 %, insbesondere von 5 - 20 % auf.

Bevorzugt weist das erfindungsgemäße Flammschutzmittel eine Hydroxylzahl von 0 - 300 mg KOH/ g, insbesondere von 5 - 200 mg KOH/g auf.

Bevorzugt weist das erfindungsgemäße Flammschutzmittel einen Wassergehalt von 0,001 - 2 mg/g, insbesondere von 0,01 - 0,9 mg/g auf.

Besonders ist das erfindungsgemäße Flammschutzmittel **dadurch gekennzeichnet, dass** es eine klare bis leicht trübe Flüssigkeit mit einer Hazenfarbzahl von 1 - 1.000, besonders bevorzugt mit einer Hazenfarbzahl von 1 - 400 darstellt.

Überraschenderweise wurde gefunden, dass sich das erfindungsgemäße Flammschutzmittel im Unterschied zu den entsprechenden unverkappten polymeren Phosphor- oder Phosphonsäureester der allgemeinen Formel (V) durch eine niedrigere Hydrolyseempfindlichkeit und bei Anwendung im PU-Schaum, dieser sich durch eine verbesserte Offenzelligkeit auszeichnet.

Beim erfindungsgemäßen Verfahren werden bevorzugt als Edukt polymere Phosphor- oder Phosphonsäureester der allgemeinen Formel (V), wie Phosphorsäure-ethylenglykol-polyester, Phosphorsäure-propylenglykol-polyester, Alkylphosphonsäure-ethylenglykol-polyester, Alkylphosphonsäurepropylenglykolpolyester, Arylphosphonsäure-ethylenglykol-polyester und Arylphosphonsäurepropylenglykol-polyester eingesetzt.

Bevorzugt werden als Edukt auch die polymeren Phosphor- oder Phosphonsäureester der allgemeinen Formel (V) wie Methylphosphonsäureethylenglykol-polyester, Ethylphosphonsäurepropylenglykol-polyester, Propylphosphonsäure-ethylenglykol-polyester, Butylphosphonsäureethylenglykolpolyester, Methylphosphonsäure-propylenglykol-polyester, Ethylphosphonsäurepropylenglykol-polyester, Propylphosphonsäure-propylenglykol-polyester und Butylphosphonsäurepropylenglykol-polyester eingesetzt.
Besonders bevorzugt werden als Edukte (polymere Phosphor- oder Phosphonsäureester der allgemeinen Formel (V)) die Handelsprodukte Exolit^{®} OP 550, Exolit^{®} OP 560 und Exolit^{®} OP 570 eingesetzt.

Bevorzugt werden als Monoalkylisocyanat Methylisocyanat, Ethylisocyanat und Cyclohexylisocyanat eingesetzt. Bevorzugt werden als Monoarylisocyanat Benzylisocyanat und Phenylisocyanat eingesetzt.

Bevorzugt werden als Carbonsäureanhydrid Acetanhydrid und Benzoesäureanhydrid eingesetzt. Bevorzugt werden als Carbonsäurechloride Essigsäurechlorid und Benzoesäurechlorid eingesetzt.

Bevorzugt werden als Alkylhalogenide Methylchlorid, Ethylchlorid, n-Propylchlorid, iso-Propylchlorid, n-Butylchlorid, iso-Butylchlorid und tert.-Butylchlorid eingesetzt. Bevorzugt wird als Aralkylhalogenid Benzylchlorid eingesetzt.

Bevorzugt werden die polymeren Phosphor- oder Phosphonsäureester der Formel (V) mit dem Verkappungsreagenz in Molverhältnis 1 : 2 bis 5 : 1, besonders bevorzugt im Molverhältnis 1 : 1 bis 1: 2 umgesetzt.

Das Molgewicht der polymeren Phosphor- oder Phosphonsäureester wird dabei aus deren Hydroxylzahl berechnet.

Bevorzugt wird 0,001 - 50 % des basischen Katalysators bzgl. der polymeren Phosphor- oder Phosphonsäureester der Formel (V) eingesetzt, besonders bevorzugt 0,05 - 35 %.

Das Verfahren kann so durchgeführt werden, dass die polymeren Phosphor- oder Phosphonsäureester der Formel (V) mit dem basischen Katalysator vorgelegt und das Verkappungsreagenz zugetropft wird.

Das Verfahren kann auch so durchgeführt werden, dass das Verkappungsreagenz mit dem basischen Katalysator vorgelegt und die polymeren Phosphor- oder Phosphonsäureester der Formel (V) zugetropft werden.

Bevorzugt als basische Katalysatoren sind tertiäre Amine und Salze schwacher Basen. Besonders bevorzugte tertiäre Amine sind Pyridin, Triethylamin, Tetramethylbutandiamin (TMBDA), 1,4-Diaza(2,2,2)bicyclooctan (DABCO), Tetramethylguanidin, 1,5-Diazabicyclo[4.3.0]non-5-en (DBN), 1,8-Diazabicyclo[5.4.0]undec-7-en (DBU), Dibutylzinndilaurat, Zinn(II)octoat, Zinnricinolat. Besonders bevorzugt sind Pyridin und Zinn(II)octoat. Als Zinn(II)octoat sind besonders die Handelsprodukte Desmorapid^{®} SO (Rhein Chemie) und Kosmos^{®} 29 (Degussa) bevorzugt.

Bevorzugt beträgt die Dosierzeit 0,1 - 10 h, besonders bevorzugt 1 - 5 h. Bevorzugt beträgt die Nachreaktionszeit 0,1 - 48 h, besonders bevorzugt 1 - 10 h.

Bevorzugt wird die Reaktion zwischen polymeren Phosphor- oder Phosphonsäureester der Formel (V) und Verkappungsreagenz bei 0 - 200 °C, besonders bevorzugt bei 10 - 150 °C durchgeführt.

Die Erfindung betrifft auch die Verwendung der erfindungsgemäßen Mischungen bzw. des erfindungsgemäßen Flammschutzmittels als Zwischenstufe zur Herstellung von Flammschutzmitteln.

Die Erfindung betrifft Flammschutzmittel, die 0,01 - 99,99 % des erfindungsgemäßen Flammschutzmittels und 0,01 - 99,99 % an anderen Flammschutzmitteln enthalten.

### Polyurethan-Prepolymer (Formmassen)

Die Erfindung betrifft Semiprepolymere und/oder Prepolymere, die 0,01 - 99,99 % des erfindungsgemäßen Flammschutzmittels enthalten.

Die Erfindung betrifft auch ein Verfahren zur Herstellung von Polyurethan-Prepolymere bzw. Semiprepolymere, dadurch gekennzeichnet, dass 0,01 - 50 % des erfindungsgemäßen Flammschutzmittels und 0,01 - 99,99 % Polyol miteinander vermischt werden.

Die Erfindung betrifft Polyurethan-Kunststoffe, die 0,01 - 99,99 % des erfindungsgemäßen Flammschutzmittels enthalten.

Bevorzugt handelt sich dabei um Urethan- und/oder Isocyanurat- und/oder Allophanat- und/oder Uretdion- und/oder Harnstoff- und/oder Carbodiimidgruppen aufweisende Schaumstoffe.

### Polyisocyanate-Komponente

Es handelt sich bei Polyurethankunststoffen vorwiegend um Urethan- und/oder Isocyanurat- und/oder Allophanat- und/oder Uretdion- und/oder Harnstoff- und/oder Carbodiimidgruppen aufweisende Schaumstoffe. Die erfindungsgemäße Verwendung erfolgt vorzugsweise bei der Herstellung von Polyurethankunststoffen.

### Polyol-Komponente

Ausgangskomponenten sind ferner Verbindungen mit mindestens zwei gegenüber Isocyanaten reaktionsfähigen Wasserstoffatomen mit einem Molekulargewicht von 400 bis 10.000 ("Polyolkomponente"). Hierunter versteht man neben Aminogruppen, Thiogruppen oder Carboxylgruppen aufweisende Verbindungen, vorzugsweise Hydroxylgruppen aufweisende Verbindungen, insbesondere 2 bis 8 Hydroxylgruppen aufweisende Verbindungen, speziell solche vom Molekulargewicht 1.000 bis 6.000, vorzugsweise 200 bis 6.000, in der Regel 2 bis 8, vorzugsweise aber 2 bis 6 Hydroxylgruppen aufweisende Polyether und Polyester sowie Polycarbonate und Polyesteramide, wie sie für die Herstellung von homogenen und von zellförmigen Polyurethanen an sich bekannt sind. Die mindestens zwei Hydroxylgruppen aufweisenden Polyether und Polyester sind erfindungsgemäß bevorzugt.

Weitere Ausgangskomponenten sind Verbindungen mit mindestens zwei gegenüber Isocyanaten reaktionsfähigen Wasserstoffatomen und einem Molekulargewicht von 32 bis 399. Auch in diesem Fall versteht man hierunter Hydroxylgruppen und/oder Aminogruppen und/oder Thiogruppen und/oder Carboxylgruppen aufweisende Verbindungen, vorzugsweise Hydroxylgruppen und/oder Aminogruppen aufweisende Verbindungen, die als Kettenverlängerungsmittel oder Vernetzungsmittel dienen. Diese Verbindungen weisen in der Regel 2 bis 8, vorzugsweise 2 bis 4 gegenüber Isocyanaten reaktionsfähige Wasserstoffatome auf.

Als Treibmittel geeignet sind Wasser und/oder leicht flüchtige organische Substanzen, z. B. n-Pentan, i-Pentan, Cyclopentan, halogenhaltige Alkane, wie Trichlormethan, Methylenchlorid oder Chlorfluoralkane, CO₂ und andere.

Gegebenenfalls werden Hilfs- und Zusatzmittel mitverwendet wie Katalysatoren der an sich bekannten Art, oberflächenaktive Zusatzstoffe, wie Emulgatoren und Schaumstabilisatoren, Reaktionsverzögerer, z. B. sauer reagierende Stoffe wie Salzsäure oder organische Säurehalogenide, ferner Zellregler der an sich bekannten Art wie Paraffine oder Fettalkohole und Dimethylpolysiloxane sowie Pigmente oder Farbstoffe und weitere Flammschutzmittel der an sich bekannten Art, ferner Stabilisatoren gegen Alterungs- und Witterungseinflüsse, Weichmacher und fungistatisch und bakteriostatisch wirkende Substanzen sowie Füllstoffe, wie Bariumsulfat, Kieselgur, Ruß- oder Schlämmkreide.

Die Erfindung betrifft auch die Verwendung der erfindungsgemäßen Mischungen bzw. der erfindungsgemäßen Flammschutzmittels als Flammschutzmittel für die Herstellung von flammgeschützten Polyurethan-Kunststoffen, die als Elastomere durch Gießen, als Hart- oder Weichschäume in kontinuierlicher oder diskontinuierlicher Herstellungsweise, als geschäumte oder massive Formartikel oder als Folie hergestellt werden.

Die Erfindung betrifft auch die Verwendung der erfindungsgemäßen Mischungen bzw. des erfindungsgemäßen Flammschutzmittels als Flammschutzmittel für Polyurethan-Kunststoffe, die in den folgenden Anwendungen: Bauindustrie, Kühlgeräteindustrie, technischen Isolierungen, Dämmplatten, Möbelpolsterungen, Textileinlagen, Matratzen, Automobilsitze, Armlehnen und Bauelemente sowie Sitz- und Armaturverkleidungen.

Besonders bevorzugt ist die Verwendung der erfindungsgemäßen Mischungen bzw. des erfindungsgemäßen Flammschutzmittels als Flammschutzmittel für Polyurethan-Kunststoffe, die auf Polyether- oder Polyester-Systemen basieren.

Die Erfindung betrifft auch ein Verfahren zur Herstellung von flammwidrigen Polyurethanweichschäumen, die durch geringe Fogging-Beiträge und angemessene Offenzelligkeit gekennzeichnet sind. Das Verfahren zur Herstellung dieser Polyurethanweichschäume ist dadurch gekennzeichnet, dass man organische Polyisocyanate mit Verbindungen mit mindestens zwei gegenüber Isocyanaten reaktionsfähigen Wasserstoffatomen mit üblichen Treibmitteln, Stabilisatoren, Aktivatoren und/oder weiteren üblichen Hilfs- und Zusatzstoffen in Gegenwart des erfindungsgemäßen Flammschutzmittels im Einstufenverfahren, Prepolymerverfahren oder Semiprepolymerverfahren umsetzt.

Bevorzugt ist die Verwendung der erfindungsgemäßen Mischungen bzw. des erfindungsgemäßen Flammschutzmittels als Flammschutzmittel für Polyurethanweichschaumstoffe, die durch ein Blockverschäumungsverfahren hergestellt werden.

Besonders bevorzugt ist die Verwendung der erfindungsgemäßen Mischungen bzw. des erfindungsgemäßen Flammschutzmittels als Flammschutzmittel für Polyurethanweichschäumen, die dann durch geringe Fogging-Beiträge und angemessene Offenzelligkeit gekennzeichnet sind.

### Beispiele

### Beispiel 1

16 g (0,134 mol) Phenylisocyanat wurden mit 0,03 g Desmorapid^{®} SO (0,03 % bzgl. Exolit OP550) in einem Kolben mit Tropftrichter, Thermometer und Rückflusskühler vorgelegt. Unter Rühren wurden bei einer Temperatur von 70 - 80 °C 100 g Exolit^{®} OP 550 (Hydroxylzahl: 131 mg KOH/g) zugetropft und noch eine Zeitlang weitergerührt. Das resultierende erfindungsgemäße Produkt ist eine klare, farblose Flüssigkeit, die sich durch eine Säurezahl von 1,6 mg KOH/g, eine Hydroxylzahl von 66 mg KOH/g und einer Viskosität von 8.700 mPa·s bei 25 °C auszeichnet.

### Beispiel 2

32 g (0,268 mol) Phenylisocyanat wurden mit 0,01 g Desmorapid^{®} SO (0,01 % bzgl. Exolit^{®} OP 550) in einem Kolben mit Tropftrichter, Thermometer und Rückflusskühler vorgelegt. Unter Rühren wurden bei einer Temperatur von 80 - 85 °C 100 g Exolit^{®} OP 550 (Hydroxylzahl: 145 mg KOH/g) zugetropft noch eine Zeitlang weitergerührt. Das resultierende erfindungsgemäße Produkt ist eine klare, schwach gelbliche Flüssigkeit, die sich durch eine Säurezahl von 0,9 mg KOH/g, eine Hydroxylzahl von 13 mg KOH/g und einer Viskosität von 9.800 mPa·s bei 25 °C auszeichnet.

### Beispiel 3

100 g Exolit^{®} OP 550 (Hydroxylzahl: 139 mg KOH/g) wurden mit 0,06 g Desmorapid^{®} SO (0,06 % bzgl. Exolit OP 550) in einem Kolben mit Tropftrichter, Thermometer und Rückflusskühler vorgelegt. Unter Rühren wurden bei einer Temperatur von 60-70 °C innerhalb von 2 h 16 g (0,134 mol) Phenylisocyanat zugetropft und noch eine Zeitlang weitergerührt. Das resultierende Produkt ist eine klare, farblose Flüssigkeit, die sich durch eine Säurezahl von 1,8 mg KOH/g, eine Hydroxylzahl von 71 mg KOH/g und einer Viskosität von 9.600 mPa·s bei 25 °C auszeichnet.

### Beispiel 4

691 g Exolit^{®} OP 570 (TP) (Hydroxylzahl: 438 mg KOH/g) wurden mit 0,21 g Desmorapid^{®} SO (0,03 % bzgl. Exolit^{®} OP 570) in einem Kolben mit Tropftrichter, Thermometer und Rückflusskühler vorgelegt. Unter Rühren wurden bei einer Temperatur von 75 - 80 °C innerhalb von 2,5 h 321 g (2,7 mol) Phenylisocyanat zugetropft und noch eine Zeitlang weitergerührt. Das resultierende erfindungsgemäße Produkt ist eine klare, farblose Flüssigkeit, die sich durch eine Säurezahl von 0,8 mg KOH/g, einer Hydroxylzahl von 155 mg KOH/g und einer Viskosität von 10,3 Pa·s bei 25 °C auszeichnet.

### Beispiel 5

230 g Exolit^{®} OP 560 (Hydroxylzahl: 417 mg KOH/g) wurden mit 0,12 g Desmorapid^{®} SO (0,05 % bzgl. Exolit^{®} OP 560) in einem Kolben mit Tropftrichter, Thermometer und Rückflusskühler vorgelegt. Unter Rühren wurden bei einer Temperatur von 40 - 50 °C innerhalb von 3 h 64 g (0,9 mol) Ethylisocyanat zugetropft und noch eine Zeitlang weitergerührt. Das resultierende erfindungsgemäße Produkt ist eine klare, farblose Flüssigkeit, die sich durch eine Säurezahl von 0,5 mg KOH/g, einer Hydroxylzahl von 130 mg KOH/g und einer Viskosität von 5.500 mPa·s bei 25°C auszeichnet.

### Beispiel 6

100 g Exolit^{®} OP 560 (Hydroxylzahl: 429 mg KOH/g) wurden mit 0,01 g Desmorapid^{®} SO (0,01 % bzgl. Exolit^{®} OP 560) in einem Kolben mit Tropftrichter, Thermometer und Rückflusskühler vorgelegt. Unter Rühren wurden bei einer Temperatur von 85 - 90°C innerhalb von 1 h 52 g (0,4 mol) Benzylisocyanat zugetropft und noch eine Zeitlang weitergerührt. Das resultierende erfindungsgemäße Produkt ist eine klare, farblose Flüssigkeit, die sich durch eine Säurezahl von 0,8 mg KOH/g, einer Hydroxylzahl von 137 mg KOH/g und einer Viskosität von 10,1 Pa.s bei 25°C auszeichnet.

### Beispiel 7

100 g Exolit^{®} OP 550 (Hydroxylzahl: 139 mg KOH/g) wurden in einem Kolben mit Tropftrichter, Thermometer und Rückflusskühler vorgelegt. Unter Rühren wurde zuerst bei einer Temperatur von 20 - 30 °C innerhalb von 10 min 13,7 g (0,134 mol) Acetanhydrid zugetropft. Dann wurde 0,106 g (1,3 mmol) trockenes Pyridin (1 mol.% bzgl. Acetanhydrid) zugetropft und auf 100 - 105 °C unter Rühren 3 h erhitzt. Das resultierende erfindungsgemäße Produkt ist eine klare, hellgelbe Flüssigkeit, die sich durch eine Säurezahl von 0,6 mg KOH/g, einer Hydroxylzahl von 63 mg KOH/g und einer Viskosität von 4.900 mPa·s bei 25 °C auszeichnet.

### Beispiel 8

54,5 g (0,4 mol) Benzoesäureanhydrid wurden in einem Kolben mit Tropftrichter, Thermometer und Rückflusskühler aufgeschmolzen und bei 60 °C mit 100 g Exotit^{®} OP 560 (Hydroxylzahl: 429 mg KOH/g) versetzt. Dann wurde 1,58 g (0,02 mol) trockenes Pyridin (5 mol.% bzgl. Benzoesäureanhydrid) zugesetzt und bei 85 - 90 °C unter Rühren 5 h erhitzt. Das resultierende erfindungsgemäße Produkt ist eine klare, farblose Flüssigkeit, die sich durch eine Säurezahl von 0,7 mg KOH/g, einer Hydroxylzahl von 141 mg KOH/g und einer Viskosität von 8.200 mPa·s bei 25 °C auszeichnet.

### Beispiel 9

100 g Exolit^{®} OP 560 (Hydroxylzahl: 429 mg KOH/g) wurden in einem Kolben mit Tropftrichter, Thermometer und Rückflusskühler vorgelegt. Unter Rühren wurde zuerst bei einer Temperatur von 20 - 30 °C innerhalb von 10 min 40,8 g (0,4 mol) Acetanhydrid zugetropft. Dann wurde 0,63 g (8 mmol) trockenes Pyridin (2 mol.% bzgl. Acetanhydrid) zugetropft und auf 90 - 95 °C unter Rühren 4 h erhitzt. Das resultierende erfindungsgemäße Produkt ist eine klare, farblose Flüssigkeit, die sich durch eine Säurezahl von 0,9 mg KOH/g, einer Hydroxylzahl von 132 mg KOH/g und einer Viskosität von 5.000 mPa·s bei 25°C auszeichnet.

### Beispiel 10

100 g Exolit^{®} OP 560 (Hydroxylzahl: 429 mg KOH/g) wurden in einem Kolben mit zwei Tropftrichtern, Thermometer und Rückflusskühler vorgelegt. Dann wurde bei 10 - 15 °C 31,4 g (0,4 mol) Acetylchlorid und 31,6 g (0,4 mol) Pyridin zugetropft und 10 h bei 25 °C gerührt. Das entstehende Salz wurde abfiltriert. Das resultierende erfindungsgemäße Produkt ist eine klare, farblose Flüssigkeit, die sich durch eine Säurezahl von 1,2 mg KOH/g, einer Hydroxylzahl von 137 mg KOH/g und einer Viskosität von 5.100 mPa·s bei 25 °C auszeichnet.

### Beispiel 11

100 g Exolit^{®} OP 550 (Hydroxylzahl: 139 mg KOH/g) wurden in einem Kolben mit zwei Tropftrichtern, Thermometer und Rückflusskühler vorgelegt. Dann wurden bei 15 - 20 °C 18,8 g (0,134 mol) Benzoylchlorid und 10,6 g (0,134 mol) Pyridin zugetropft und 5 h bei 30 °C gerührt. Das entstehende Salz wurde abfiltriert. Das resultierende erfindungsgemäße Produkt ist eine klare, hellgelbe Flüssigkeit, die sich durch eine Säurezahl von 1,5 mg KOH/g, einer Hydroxylzahl von 76 mg KOH/g und einer Viskosität von 7.900 mPa·s bei 25°C auszeichnet.

### Beispiel 12

Hydrolysebeständigkeit des erfindungsgemäßen Flammschutzmittels gegenüber Exolit^{®} OP 570

Zum Vergleich der Hydrolysebeständigkeit von Exolit^{®} OP 570 (nicht verkappter Phosphor- oder Phosphonsäureester mit dem resultierenden Produkt aus Beispiel 4 wurde von beiden Produkten die Säurezahl vor und nach Zugabe von 1 % Wasser bestimmt. Die Verfolgung der Säurezahl beider Produkte ist in Tabelle 1 wiedergegeben.

**Tabelle 1: Verfolgung der Säurezahl in Beispiel 12**

| Zeit | Säurezahl [mg KOH/g] | |
|---|---|---|
| | Flammschutzmittel aus Beispiel 4 | Exolit^{®} OP 570 (TP) |
| Ausgangsmaterial ohne H₂O-Zusatz | 0,8 | 1,4 |
| mit 1 % H₂O (frisch angesetzt) | 1,3 | 1,4 |
| nach 1 Tag | 2,5 | 5,3 |
| nach 2 Tagen | 2,7 | 6,7 |
| nach 3 Tagen | 3,1 | 8,6 |

Die Säurezahl des erfindungsgemäßen Flammschutzmittels aus Beispiel 4 steigt nach Wasserzugabe deutlich langsamer an als das entsprechende nicht verkappte Produkt Exolit^{®} OP 570. Das erfindungsgemäße Flammschutzmittel aus Beispiel 4 ist somit auch deutlich weniger hydrolyseempfindlich als Exolit^{®} OP 570.

### Beispiel 13

### Polyurethanweichschaumformulierungen mit Ausprüfung

Das oben beschriebenen Flammschutzmittel Exolit^{®} OP 570 sowie das erfindungsgemäße Flammschutzmittel aus Beispiel 4 wurden in Polyurethanweichschäumen mit einem NCO-Index von 105 der Formulierung nach Tabelle 2 eingearbeitet. Der NCO-Index ist eine Kennzahl, die das prozentuale Verhältnis der eingesetzten Isocyanatmenge zur stöchiometrischen, d. h. berechneten Isocyanatmenge, bei der Umsetzung je einer isocyanataktiven Gruppe mit einer Isocyanatgruppe beschreibt.

**Tabelle 2: Polyurethanweichschaumformulierung A**

| | Standard ohne FSM* | Standard mit FSM |
|---|---|---|
| Polyetherpolyol (Arcol® Polyol 1108, Bayer MaterialScience) | 100 Teile | 100 Teile |
| Zinnricinoleat (Kosmos^{®} EF, Goldschmidt) | 0,3 Teile | 0,3 Teile |
| 2-((2-(2-(Dimethylamino)ethoxy)-ethyl)methylamino)ethanol (Tegoamin^{®} ZE3, Degussa) | 0,2 Teile | 0,2 Teile |
| Polyethermodifiziertes Polysiloxan (Tegostab^{®} B 8232, Goldschmidt) | 0,7 Teile | 0,7 Teile |
| Wasser | 3,5 Teile | 3,5 Teile |
| 2,4- und 2,6-Toluylendiisocyanat (Desmodur^{®} T80, Bayer MaterialScience) | 47,8 Teile | 47,8 Teile |
| Flammschutzmittel | 0 Teile | 1-10 Teile |

| | | |
|---|---|---|
| *FSM: Flammschutzmittel | | |

**Tabelle 3: Eigenschaften der Polyurethan-Weichschäume A mit erfindungsgemäßem Flammschutzmittel aus Beispiel 4 im Vergleich**

| | Standard ohne FSM | Flammschutzmittel aus Beispiel 4 (Exolit^{®} OP 570, verkappt) | Exolit^{®} OP 570 |
|---|---|---|---|
| FSM-Gehalt (Teile) | 0 | 7 | 4 |
| Steigzeit (s) | 112 | 115 | 114 |
| Raumgewicht (kg/m³) | 30,5 | 29,8 | 31,0 |
| Luftdurchlässigkeit | 15 | 16 | >250 |
| Brandklasse nach FMVSS 302 | B = 82 mm/min | SE | SE |

Die Flammfestigkeit der Polyurethanweichschäume wurde mittels des FMVSS 302 - Tests (Federal Motor Vehicle Safety Standard) geprüft. Terminologie zur Beurteilung des Brandverhaltens:
- SE: Selbsterlöschend
- SE/NBR: Selbsterlöschend/keine Brennrate
- SE/B: Selbsterlöschend/mit Brennrate
- B: Brennrate

Der PU-Weichschaum A mit dem erfindungsgemäßen Flammschutzmittel aus Beispiel 4 zeigt gegenüber dem PU-Weichschaum des nicht verkappten Produktes Exolit^{®} OP 570 eine wesentlich verbesserte Luftdurchlässigkeit. Die Offenzelligkeit des PU-Weichschaums mit dem Flammschutzmittel aus Beispiel 4 ist sogar ebenso gut wie der Standard ohne Flammschutzmittel (dies ist völlig ungewöhnlich und sehr überraschend, weil der Einsatz der bisher bekannten Flammschutzmittel aus dem Stand der Technik ansonsten zu einer Reduzierung der Offenzelligkeit geführt hat).
Der Polyurethan-Weichschaum A mit dem Flammschutzmittel aus Beispiel 4 erreicht mit SE dieselbe Brandklasse wie der Polyurethan-Weichschaum A mit Exolit^{®} OP 570 (TP).

**Tabelle 4: Polyurethanweichschaumformulierung B**

| | Standard ohne FSM* | Standard mit FSM |
|---|---|---|
| Polyetherpolyol (Arcot^{®} Polyol 1108, Bayer MaterialScience) | 100 Teile | 100 Teile |
| Triethylendiamin in Dipropylenglykol (Tegoamin^{®} 33, Degussa) | 0,2 Teile | 0,2 Teile |
| Bis (2-Dimethylaminoethyl)ether in Dipropylenglykol (Niax^{®} catalyst A-1, GE Silicones) | 0,1 Teile | 0,1 Teile |
| Zinn(II)octoat (Desmorapid^{®} SO; Rhein Chemie) | 0,15 Teile | 0,15 Teile |
| Polyethermodifiziertes Polysiloxan (Tegostab^{®} B 8232, Goldschmidt) | 1,3 Teile | 1,3 Teile |
| Wasser | 3,5 Teile | 3,5 Teile |
| 2,4- und 2,6-Toluylendiisocyanat (Desmodur^{®} T80, Bayer MaterialScience) | 23,9 Teile | 23,9 Teile |
| 2,4- und 2,6-Toluylendiisocyanat (Desmodur^{®} T65, Bayer MaterialScience) | 23,9 Teile | 23,9 Teile |
| Flammschutzmittel | 0 Teile | 1-10 Teile |

| | | |
|---|---|---|
| *FSM: Flammschutzmittel | | |

**Tabelle 5: Eigenschaften der PUR-Weichschäume B mit Flammschutzmittel aus Beispiel 4 im Vergleich**

| | Standard ohne FSM | Flammschutzmittel aus Beispiel 4 (Exolit^{®} OP 570, verkappt) | Exolit^{®} OP 570 |
|---|---|---|---|
| FSM-Gehalt (Teile) | 0 | 7 | 4 |
| Steigzeit (s) | 120 | 122 | 115 |
| Raumgewicht (kg/m³) | 30,1 | 32,0 | 31,3 |
| Luftdurchlässigkeit | 4 | 5 | >250 |
| Brandklasse nach FMVSS 302 | B = 114 mm/min | SE | SE |

Der PU-Weichschaum B mit der erfindungsgemäßen Flammschutzmittel aus Beispiel 4 zeigt gegenüber dem PU-Weichschaum des nicht verkappten Produktes Exolit^{®} OP 570 (TP) eine verbesserte Luftdurchlässigkeit. Die Offenzelligkeit des PU-Weichschaums mit dem Flammschutzmittel aus Beispiel 4 ist sogar ebenso gut wie der Standard ohne Flammschutzmittel. Der PU-Weichschaum B mit dem Flammschutzmittel aus Beispiel 4 erreicht mit SE dieselbe Brandklasse wie der Schaum mit Exolit^{®} OP 570 (TP).

## Patentansprüche

1. Mischungen von Verbindungen der Formeln (I), (III), (IV) und/oder (V), 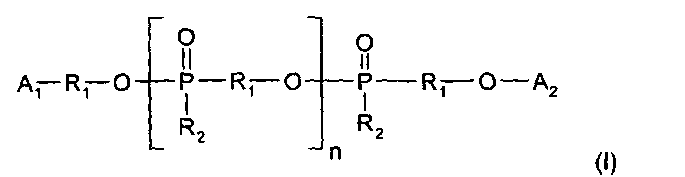 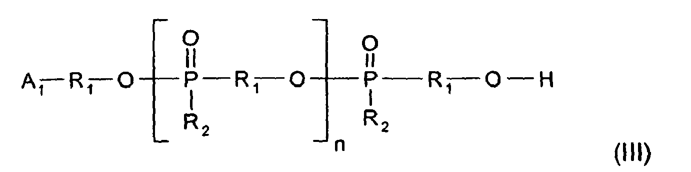 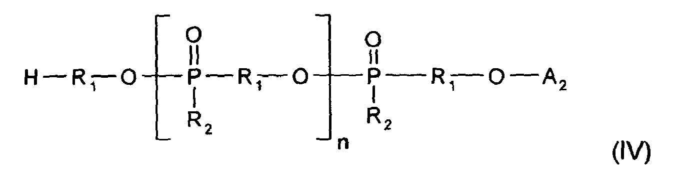 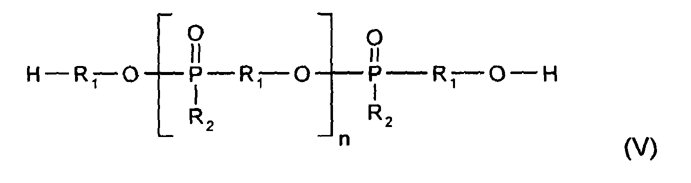 worin n eine durchschnittliche Kettenlänge von 0 bis 10,
A₁ und A₂ gleich oder verschieden sind und unabhängig voneinander C(=O)NHR₅, C(=O)R₅, CH₃, CH₂CH₃, CH₂CH₂CH₃, CH(CH₃)₂, CH₂(CH₂)₂CH₃, CH₂CH(CH₃)₂, C(CH₃)₃, C₆H₅ und/oder CH₂-C₆H₅,
R₁ ein Rest der allgemeinen Formel (II), 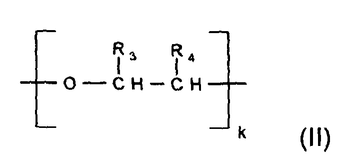 worin k eine durchschnittliche Kettenlänge von 0 - 5 bedeutet;
R₂ CH₃, CH₂CH₃, CH₂CH₂CH₃, CH₂(CH₃)₂, CH₂(CH₂)₂CH₃, CH₂CH(CH₃)₂, C(CH₃)₃, C₆H₅ oder CH₂-C₆H₅; OCH₃, OCH₂CH₃, O(CH₂)₂CH₃, OCH(CH₃)₂, O(CH₂)₃CH₃, OCH₂CH(CH₃)₂, OC(CH₃)₃, O-C₆H₅ oder O-CH₂-C₆H₅,
R₃, R₄, R₅ gleich oder verschieden sind und unabhängig voneinander CH₃, CH₂CH₃, CH₂CH₂CH₃, CH(CH₃)₂, CH₂(CH₂)₂CH₃, CH₂CH(CH₃)₂, C(CH₃)₃, C₆H₅ und/oder CH₂-C₆H₅ bedeuten und wobei mindestens 2 Verbindungen der Formeln (I), (III), (IV) oder (V) gleichzeitig in der Mischung anwesend sind.

2. Mischungen nach Anspruch 1, enthaltend
0,1 bis 99,7 Gew.-% Verbindungen der Formel (I)
0,1 bis 99,7 Gew.-% Verbindungen der Formel (II)
0,1 bis 99,7 Gew.-% Verbindungen der Formel (IV)

3. Mischungen nach Anspruch 1, enthaltend
0,1 bis 99,6 Gew.-% Verbindungen der Formel (I)
0,1 bis 99,6 Gew.-% Verbindungen der Formel (II)
0,1 bis 99,6 Gew.-% Verbindungen der Formel (IV)
0,1 bis 99,6 Gew.-% Verbindungen der Formel (V).

4. Verfahren zur Herstellung von Mischungen nach einem oder mehreren der Ansprüche 1 bis 3, **dadurch gekennzeichnet, dass** ein polymerer Phosphor- oder Phosphonsäureester der allgemeinen Formel (V) mit Monoalkylisocyanaten, Monoarylisocyanaten, Carbonsäureanhydriden, Carbonsäurechloriden, Alkylhalogeniden, Aralkylhalogeniden und/oder Diazomethan in Gegenwart eines basischen Katalysators zu der Mischung umgesetzt wird.

5. Verfahren nach Anspruch 4, **dadurch gekennzeichnet, dass** es sich bei dem basischen Katalysator um Pyridin, Triethylamin, Tetramethylbutandiamin (TMBDA), 1,4-Diaza(2,2,2)bicyclooctan (DABCO), Tetramethylguanidin, 1,5-Diazabicyclo[4.3.0]non-5-en (DBN), 1,8-Diazabicyclo-[5.4.0]undec-7-en (DBU), Dibutylzinndilaurat, Zinn(II)octoat und/oder Zinnricinolat handelt.

6. Verwendung von Mischungen nach einem oder mehreren der Ansprüche 1 bis 3 als Flammschutzmittel, in Mischung mit anderen Flammschutzmitteln, alleine oder in Mischung mit anderen Flammschutzmitteln zur Herstellung von weiteren Flammschutzmitteln oder Vorprodukten davon.

7. Verwendung von Mischungen nach einem oder mehreren der Ansprüche 1 bis 3 als Flammschutzmittel für Polyurethan-Kunststoffe, die auf Polyether- oder Polyester-Systemen basieren.

8. Verwendung von Mischungen nach einem oder mehreren der Ansprüche 1 bis 3 als Flammschutzmittel für die Herstellung von flammgeschützten Polyurethan-Kunststoffen, die als Elastomere durch Gießen, als Hart- oder Weichschäume in kontinuierlicher oder diskontinuierlicher Herstellungsweise, als geschäumte oder massive Formartikel oder als Folie hergestellt werden.

9. Verwendung von Mischungen nach einem oder mehreren der Ansprüche 1 bis 3 als Flammschutzmittelbooster, als Flammschutzmittel für Klarlacke und Intumeszenzbeschichtungen, Flammschutzmittel für Holz und andere cellulosehaltige Produkte, als reaktives und/oder nicht reaktives Flammschutzmittel für Polymere und/oder zum flammhemmend Ausrüsten von Polyester und Cellulose-Rein- und Mischgeweben durch Imprägnierung.

10. Verwendung von Mischungen nach einem oder mehreren der Ansprüche 1 bis 3 als Binder für Giesereimassen, Formsande;
als Vernetzer bzw. Beschleuniger beim Aushärten von Epoxyharzen, Polyurethanen und ungesättigten Polyesterharzen;
als Polymerstabilisatoren, wie als Lichtschutzstabilisator, Radikalfänger und/oder Thermostabilisatoren für Baumwollgewebe, Polymerfasern, Kunststoffe;
als Pflanzenschutzmittel, wie als Pflanzenwachstumsregulator, als Herbizid, Pestizid oder Fungizid;
als Sequestrierungsmittel, bei der Mineralölgewinnung und in Metallbehandlungsmitteln;
als Mineralöl-Additiv, als Antioxidans und zur Erhöhung der Oktanzahl;
als Korrosionsschutzmittel;
in Wasch- und Reinigungsmittelanwendungen, als Entfärbungsmittel;
in Elektronikanwendungen, in Polyelektrolyten für Kondensatoren, in Batterien und Akkumulatoren, sowie als Radikalfänger in photosensitiven Schichten;
als Aldehydfänger;
Formaldehydfänger in Klebemassen und Formkörpern, in Bauanwendungen, Automobil-, Schiff-, Luft und Raumfahrtindustrie und für die Elektrotechnik.

11. Flammschutzmittel, enthaltend eine Mischung von Verbindungen der Formeln (I), (III), (IV) und/oder (V), **dadurch gekennzeichnet, dass es**
0,1 - 10 Gew.-% Verbindungen der Formel (V),
0 - 30 Gew.-% Verbindungen der Formel (III) und (IV) und
70 - 99,9 Gew.-% Verbindungen der Formel (I) enthält.

12. Flammschutzmittel, enthaltend eine Mischung von Verbindungen der Formeln (I), (III), (IV) und/oder (V), **dadurch gekennzeichnet, dass es**
0,1 - 20 Gew.-% Verbindungen der Formel (V)
50 - 99,8 Gew.-% Verbindungen der Formel (III) und (IV) und
0,1 - 20 Gew.-% Verbindungen der Formel (I) enthält.

13. Flammschutzmittel, enthaltend eine Mischung von Verbindungen der Formeln (I), (III), (IV) und/oder (V), **dadurch gekennzeichnet, dass es**
0,1 - 10 Gew.-% Verbindungen der Formel (I),
25 - 60 Gew.-% Verbindungen der Formeln (III) und (IV) und
30 - 74,9 Gew.-% Verbindungen der Formel (V) enthält.

14. Flammschutzmittel, enthaltend eine Mischung von Verbindungen der Formeln (I), (III), (IV) und/oder (V), **dadurch gekennzeichnet, dass es**
0,1 - 5 Gew.-% Verbindungen der Formel (I),
10 - 40 Gew.-% Verbindungen der Formeln (III) und (IV) und
50 - 89,9 Gew.-% Verbindungen der Formel (V) enthält.

15. Flammschutzmittel nach einem oder mehreren der Ansprüche 14 bis 17, **dadurch gekennzeichnet, dass**
R₂ CH₃, CH₂CH₃, CH₂CH₂CH₃, CH(CH₃)₂, C₆H₅, OCH₃, OCH₂CH₃, O(CH₂)₂CH₃ oder O-C₆H₅,
R₃, R₄, R₅ gleich oder verschieden sind und unabhängig voneinander CH₃, CH₂CH₃ und/oder CH₂CH₂CH₃ und
A₁, A₂ gleich oder verschieden sind und unabhängig voneinander C(=O)NHR₅, C(=O)R₅, CH₃, CH₂CH₃, (CH₂)₂CH₃, CH(CH₃)₂, CH₂(CH₂)₂CH₃, CH₂CH(CH₃)₂, C(CH₃)₃, C₆H₅ und/oder CH₂-C₆H₅,
k eine durchschnittliche Kettenlänge von 1 - 3 und
n eine durchschnittliche Kettenlänge von 0 - 5 bedeutet.

## Claims

1. A mixture of compounds of the formulae (I), (III), (IV), and/or (V), 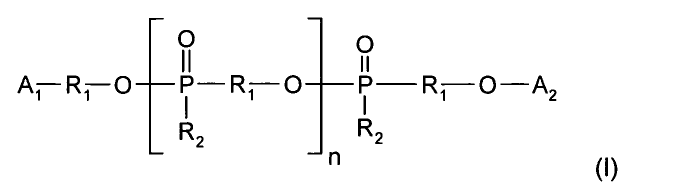 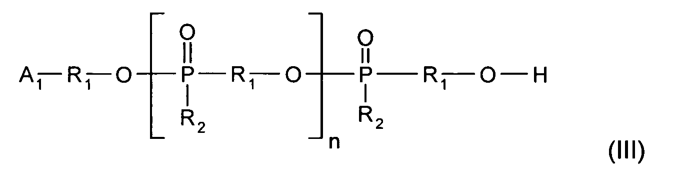 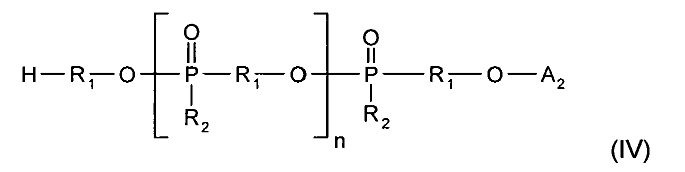 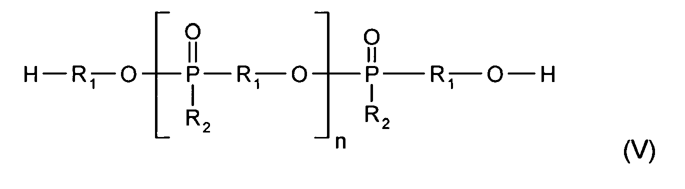 in which n is an average chain length of from 0 to 10,
A₁ and A₂ are identical or different and, independently of one another, are C(=O)NHR₅, C(=O)R₅, CH₃, CH₂CH₃, CH₂CH₂CH₃, CH(CH₃)₂, CH₂(CH₂)₂CH₃, CH₂CH(CH₃)₂, C(CH₃)₃, C₆H₅, and/or CH₂-C₆H₅,
R₁ is a moiety of the formula (II), 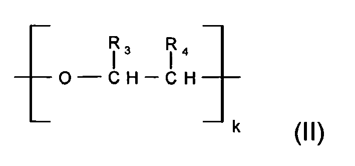 in which k is an average chain length of from 0 to 5;
R₂ is CH₃, CH₂CH₃, CH₂CH₂CH₃, CH₂(CH₃)₂, CH₂(CH₂)₂CH₃, CH₂CH(CH₃)₂, C(CH₃)₃, C₆H₅, or CH₂-C₆H₅; OCH₃, OCH₂CH₃, O(CH₂)₂CH₃, OCH(CH₃)₂, O(CH₂)₃CH₃, OCH₂CH(CH₃)₂, OC(CH₃)₃, O-C₆H₅, or O-CH₂-C₆H₅,
R₃, R₄, R₅ are identical or different and, independently of one another, are CH₃, CH₂CH₃, CH₂CH₂CH₃, CH(CH₃)₂, CH₂(CH₂)₂CH₃, CH₂CH(CH₃)₂, C(CH₃)₃, C₆H₅, and/or CH₂-C₆H₅ and where at least 2 compounds of the formulae (I), (III), (IV), or (V) are simultaneously present in the mixture.

2. The mixture as claimed in claim 1, comprising
from 0.1 to 99.7% by weight of compounds of the formula (I)
from 0.1 to 99.7% by weight of compounds of the formula (II)
from 0.1 to 99.7% by weight of compounds of the formula (IV).

3. The mixture as claimed in claim 1, comprising
from 0.1 to 99.6% by weight of compounds of the formula (I)
from 0.1 to 99.6% by weight of compounds of the formula (II)
from 0.1 to 99.6% by weight of compounds of the formula (IV)
from 0.1 to 99.6% by weight of compounds of the formula (V).

4. A process for the preparation of mixtures as claimed in one or more of claims 1 to 3, which comprises reacting a polymeric phosphoric or phosphonic ester of the formula (V) with monoalkyl isocyanates, monoaryl isocyanates, carboxylic anhydrides, carbonyl chlorides, alkyl halides, aralkyl halides, and/or diazomethane in the presence of a basic catalyst, to give the mixture.

5. The process as claimed in claim 4, wherein the basic catalyst involves pyridine, triethylamine, tetramethylbutanediamine (TMBDA), 1,4-diaza[2.2.2]bicyclooctane (DABCO), tetramethylguanidine, 1,5-diazabicyclo[4.3.0]non-5-ene (DBN), 1,8-diazabicyclo[5.4.0]undec-7-ene (DBU), dibutyltin dilaurate, stannous octoate, and/or stannous ricinoleate.

6. The use of mixtures as claimed in one or more of claims 1 to 3 as flame retardants, or in a mixture with other flame retardants, or alone or in a mixture with other flame retardants for the preparation of further flame retardants or of precursors thereof.

7. The use of mixtures as claimed in one or more of claims 1 to 3 as flame retardants for polyurethane plastics which are based on polyether systems or on polyester systems.

8. The use of mixtures as claimed in one or more of claims 1 to 3 as flame retardants for the production of flame-retardant polyurethane plastics which are produced in the form of elastomers by casting, in the form of rigid or flexible foams by a continuous or batchwise production method, or in the form of foamed or solid molded items, or in the form of foil.

9. The use of mixtures as claimed in one or more of claims 1 to 3 as flame retardant boosters, as flame retardants for clearcoat lacquers and intumescent coatings, or flame retardants for wood and other cellulose-containing products, or as reactive and/or non-reactive flame retardant for polymers, and/or for providing flame retardancy to polyester and to unblended or blended cellulose textiles, by impregnation.

10. The use of mixtures as claimed in one or more of claims 1 to 3 as binders for foundry materials and molding sands;
as crosslinking agents or accelerator in the hardening of epoxy resins, of polyurethanes, or of unsaturated polyester resins;
as polymer stabilizers, e.g. as light stabilizer, free-radical scavengers, and/or heat stabilizers for cotton fabrics, polymer fibers, plastics;
as crop protection agent, e.g. as plant growth regulator, or as herbicide, pesticide, or fungicide;
as sequestering agent, e.g. in petroleum production, and in metal-treatment agents; as petroleum additive, e.g. as antioxidant, and for increasing octane number;
or as corrosion-prevention agent;
in laundry-detergent and cleaning-product applications, e.g. as decolorizer;
in electronics applications, e.g. in polyelectrolytes for capacitors, batteries, and accumulators, or else as free-radical scavengers in photosensitive layers;
as aldehyde scavengers;
or formaldehyde scavengers in adhesive compositions and in moldings, e.g. in construction applications, in the automobile industry, in shipbuilding, in the aerospace industry, and for electrical engineering.

11. A flame retardant, comprising a mixture of compounds of the formulae (I), (III), (IV), and/or (V), which comprises
from 0.1 - 10% by weight of compounds of the formula (V),
from 0 - 30% by weight of compounds of the formula (III) and (IV), and
from 70 - 99.9% by weight of compounds of the formula (I).

12. A flame retardant, comprising a mixture of compounds of the formulae (I), (III), (IV), and/or (V), which comprises
from 0.1 - 20% by weight of compounds of the formula (V),
from 50 - 99.8% by weight of compounds of the formula (III) and (IV), and
from 0.1 - 20% by weight of compounds of the formula (I).

13. A flame retardant, comprising a mixture of compounds of the formulae (I), (III), (IV), and/or (V), which comprises
from 0.1 - 10% by weight of compounds of the formula (I),
from 25 - 60% by weight of compounds of the formulae (III) and (IV), and
from 30 - 74.9% by weight of compounds of the formula (V).

14. A flame retardant, comprising a mixture of compounds of the formulae (I), (III), (IV), and/or (V), which comprises
from 0.1 - 5% by weight of compounds of the formula (I),
from 10 - 40% by weight of compounds of the formulae (III) and (IV), and
from 50 - 89.9% by weight of compounds of the formula (V).

15. The flame retardant as claimed in one or more of claims 14 to 17, wherein
R₂ is CH₃, CH₂CH₃, CH₂CH₂CH₃, CH(CH₃)₂, C₆H₅, OCH₃, OCH₂CH₃, O(CH₂)₂CH₃, or O-C₆H₅,
R₃, R₄, R₅ are identical or different and, independently of one another, are CH₃, CH₂CH₃, and/or CH₂CH₂CH₃, and
A₁, A₂ are identical or different and, independently of one another, are C(=O)NHR₅, C(=O)R₅, CH₃, CH₂CH₃, (CH₂)₂CH₃, CH(CH₃)₂, CH₂(CH₂)₂CH₃, CH₂CH(CH₃)₂, C(CH₃)₃, C₆H₅, and/or CH₂-C₆H₅,
k is an average chain length of from 1 to 3, and n is an average chain length of from 0 to 5.

## Revendications

1. Mélanges de composés de formules (I), (III), (IV) et/ou (V) 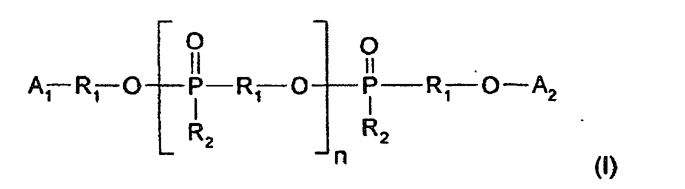 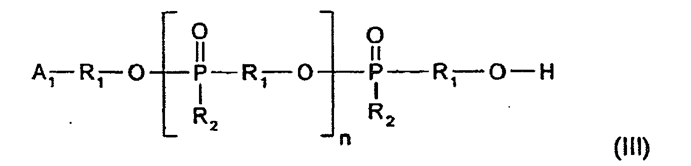 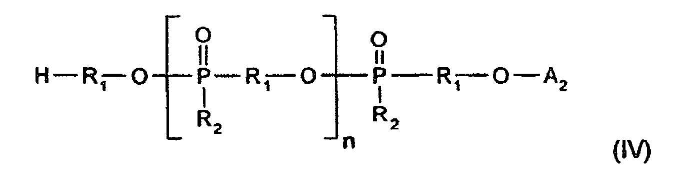 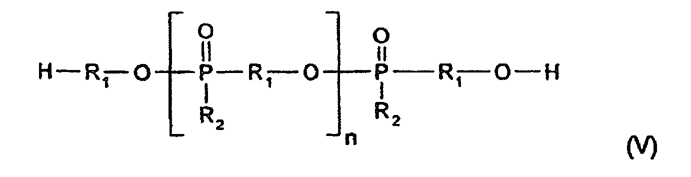 dans lesquelles n représente une longueur moyenne de chaîne de 0 à 10.
A₁ et A₂ sont identiques ou différents et représentent, indépendamment l'un de l'autre, C(=O)NHR₅, C(=O)R₅, CH₃, CH₂CH₃, CH₂CH₂CH₃, CH(CH₃)₂, CH₂(CH₂)₂CH₃, CH₂CH(CH₃)₂, C(CH₃)₃, C₆H₅ et/ou CH₂-C₆H₅,
R₁ représente un radical de formule générale (II), 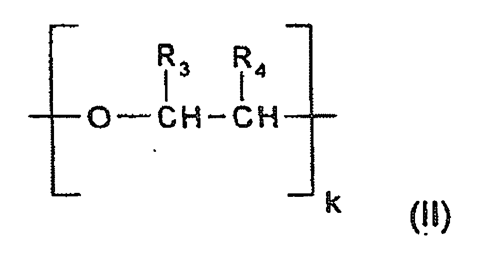 dans laquelle k représente une longueur moyenne de chaîne de 0 - 5 ;
R₂ représente CH₃, CH₂CH₃, CH₂CH₂CH₃, CH₂(CH₃)₂, CH₂(CH₂)₂CH₃, CH₂CH(CH₃)₂, C(CH₃)₃, C₆H₅ ou CH₂-C₆H₅ ; OCH₃, OCH₂CH₃, O(CH₂)₂CH₃, OCH(CH₃)₂, O(CH₂)₃CH₃, OCH₂CH(CH₃)₂, OC(CH₃)₃, O-C₆H₅ ou O-CH₂-C₆H₅, R₃, R₄, R₅ sont identiques ou différents, et représentent chacun indépendamment CH₃, CH₂CH₃, CH₂CH₂CH₃, CH(CH₃)₂, CH₂(CH₂)₂CH₃, CH₂CH(CH₃)₂, C(CH₃)₃, C₆H₅ et/ou CH₂-C₆H₅ et au moins 2 composés de formules (I), (III), (IV) ou (V) étant présents simultanément dans le mélange.

2. Mélanges selon la revendication 1, contenant
0,1 à 99,7 % en poids de composés de formule (I)
0,1 à 99,7 % en poids de composés de formule (II)
0,1 à 99,7 % en poids de composés de formule (IV).

3. Mélanges selon la revendication 1, contenant
0,1 à 99,6 % en poids de composés de formule (I)
0,1 à 99,6 % en poids de composés de formule (II)
0,1 à 99,6 % en poids de composés de formule (IV)
0,1 à 99,6 % en poids de composés de formule (V).

4. Procédé pour la préparation de mélanges selon une ou plusieurs des revendications 1 à 3, **caractérisé en ce qu'**on fait réagir un ester d'acide phosphorique ou phosphonique polymère de formule générale (V) avec des isocyanates de monoalkyle, des isocyanates de monoaryle, des anhydrides d'acides carboxyliques, des chlorures de carbonyle, des halogénures d'alkyle, des halogénures d'aralkyle et/ou du diazométhane en présence d'un catalyseur basique, pour obtenir le mélange.

5. Procédé selon la revendication 4, **caractérisé en ce que** le catalyseur basique consiste en pyridine, triéthylamine, tétraméthylbutanediamine (TMBDA), 1,4-diaza(2,2,2)bicyclo-octane (DABCO), tétraméthyl-guanidine, 1,5-diazabicyclo[4.3.0]non-5-ène (DBN), 1,8-diazabicyclo-[5.4.0]undéc-7-ène (DBU), dilaurate de dibutylétain, octoate d'étain(II) et/ou ricinoléate d'étain.

6. Utilisation de mélanges selon une ou plusieurs des revendications 1 à 3, en tant qu'agent ignifuge, en mélange avec d'autres agents ignifuges, seuls ou en mélange avec d'autres agents ignifuges pour la préparation d'autres agents ignifuges ou de précurseurs de ceux-ci.

7. Utilisation de mélanges selon une ou plusieurs des revendications 1 à 3, en tant qu'agent ignifuge pour des matières plastiques polyuréthane qui sont à base de systèmes polyéther ou polyester.

8. Utilisation de mélanges selon une ou plusieurs des revendications 1 à 3, en tant qu'agent ignifuge pour la production de matières plastiques polyuréthane ignifugées qui sont produites sous forme d'élastomères par coulée, sous forme de mousses souples ou rigides en mode de production continu ou discontinu, sous forme d'articles moulés massifs ou expansés ou sous forme de feuille.

9. Utilisation de mélanges selon une ou plusieurs des revendications 1 à 3 en tant que booster d'agent ignifuge, en tant qu'agent ignifuge pour vernis et revêtements intumescents, agent ignifuge pour bois et autres produits cellulosiques, en tant qu'agent ignifuge réactif et/ou non réactif pour polymères et/ou pour le traitement ignifugeant de tissus de polyester et de cellulose purs et mélangés, par imprégnation.

10. utilisation de mélanges selon une ou plusieurs des revendications 1 à 3, en tant que liant pour masses de fonderie, sables pour moulage ;
en tant qu'agent de réticulation ou accélérateur dans le durcissement de résines époxy, polyuréthanes et résines polyester insaturées ;
en tant que stabilisants de polymères, comme en tant que photostabilisant, capteur de radicaux et/ou stabilisants thermiques pour tissus de coton, fibres polymères, matières plastiques ;
en tant qu'agent phytosanitaire, comme en tant que régulateur de la croissance végétale, en tant qu'herbicide, pesticide ou fongicide ;
en tant que séquestrant, dans l'extraction d'huile minérale et dans des agents de traitement de métaux ; en tant qu'additif à des huiles minérales, en tant qu'antioxydant et pour l'augmentation de l'indice d'octane ;
en tant qu'agent anticorrosion ;
dans des applications de produits de lavage et de nettoyage, en tant que dégraissant ;
dans des applications électroniques, dans des polyélectrolytes pour condensateurs, dans des batteries et des accumulateurs, ainsi que comme capteurs de radicaux dans des couches photosensibles ;
en tant que capteur d'aldéhydes ;
capteur de formaldéhyde dans des matières adhésives et des corps moulés, dans des applications dans le bâtiment, l'industrie automobile, navale, aéronautique et aérospatiale et pour l'électrotechnique.

11. Agent ignifuge, contenant un mélange de composés de formules (I), (III), (IV) et/ou (V), **caractérisé en ce qu'**il contient
0,1 - 10 % en poids de composés de formule (V),
0 - 30 % en poids de composés de formules (III) et (IV) et
70 - 99,9 % en poids de composés de formule (I).

12. Agent ignifuge, contenant un mélange de composés de formules (I), (III), (IV) et/ou (V), **caractérisé en ce qu'**il contient
0,1 - 20 % en poids de composés de formule (V),
50 - 99,8 % en poids de composés de formules (III) et (IV) et
0,1 - 20 % en poids de composés de formule (I).

13. Agent ignifuge, contenant un mélange de composés de formules (I), (III), (IV) et/ou (V), **caractérisé en ce qu'**il contient
0,1 - 10 % en poids de composés de formule (I),
25 - 60 % en poids de composés de formules (III) et (IV) et
30 - 74,9 % en poids de composés de formule (V).

14. Agent ignifuge, contenant un mélange de composés de formules (I), (III), (IV) et/ou (V), **caractérisé en ce qu'**il contient
0,1 - 5 % en poids de composés de formule (I),
10 - 40 % en poids de composés de formules (III) et (IV) et
50 - 89,9 % en poids de composés de formule (V).

15. Agent ignifuge selon une ou plusieurs des revendications 14 à 17, **caractérisé en ce que** R₂ représente CH₃, CH₂CH₃, CH₂CH₂CH₃, CH(CH₃)₂, C₆H₅, OCH₃, OCH₂CH₃, O(CH₂)₂CH₃ ou O-C₆H₅,
R₃, R₄, R₅ sont identiques ou différents et représentent, chacun indépendamment, CH₃, CH₂CH₃ et/ou CH₂CH₂CH₃ et
A₁, A₂ sont identiques ou différents et représentent indépendamment l'un de l'autre, C(=O)NHR₅, C(=O)R₅, CH₃, CH₂CH₃, (CH₂)₂CH₃, CH(CH₃)₂, CH₂(CH₂)₂CH₃, CH₂CH(CH₃)₂, C(CH₃)₃, C₆H₅ et/ou CH₂-C₆H₅,
k représente une longueur moyenne de chaîne de 1 - 3 et n représente une longueur moyenne de chaîne de 0 - 5.
